# EUROPEAN PATENT SPECIFICATION

(11) **EP 4 050 332 B1**
(45) Date of publication and mention of the grant of the patent: **15.04.2026**
(21) Application number: 22158580.5
(22) Date of filing: 24.02.2022
(51) Int. Cl.: G01N 30/24

(54) **AUTOSAMPLERS FOR SAMPLING LIQUIDS**
AUTOSAMPLER ZUR PROBENAHME VON FLÜSSIGKEITEN
ÉCHANTILLONNEURS AUTOMATIQUES POUR L'ÉCHANTILLONNAGE DE LIQUIDES

(30) Priority: 24.02.2021 US 202117183755
(43) Date of publication of application: 31.08.2022
(73) Proprietor: Thermo Finnigan LLC, San Jose, CA 95134 (US)
(72) Inventor: GUCKENBERGER, George B., San Jose, 95134 (US); ANTONINI, Giuliano, 20090 Rodano (IT); FACCHETTI, Riccardo, 20090 Rodano (IT)
(74) Representative: Boult Wade Tennant LLP

(56) References cited:
- CN-A- 110 646 551
- CN-U- 202 442 999
- US-A1- 2004 057 855
- US-A1- 2016 303 397
- US-A1- 2019 381 252
- US-B2- 9 810 668

## Description

### Field

The present disclosure relates to autosamplers, more in particular to autosamplers for sampling liquids, for example for use in gas chromatography.

### Background

Autosamplers are well known. They serve to take a sample from a vial, which sample can then be conveyed to another container or be injected into an injection port of an analytic device, such as a chromatograph. Typically, an autosampler is provided with a syringe for withdrawing the sample from a vial. The syringe can be actuated by an actuator, which may for example include an electrical motor, to move the plunger of the syringe. The actuator can be controlled by a microprocessor so as to provide an automatically controlled sampling process. The syringe can typically be moved relative to a holder in which the vials are placed. The vial holder may be capable of moving horizontally while the syringe may be movable only vertically, to reach the vial. In typical autosamplers, however, the syringe can carry out a horizontal movement, which movement can be linear and/or rotational.

An example of a modern autosampler is the Thermo Scientific^{™} AI/AS 1310 Series Autosampler. This autosampler type is particularly suitable for gas chromatography liquid injections. This known autosampler has an elongate vertical housing which is capable of rotating so as to allow the syringe to be brought above different vial positions of a curved holder and above an injection port. The syringe needle can move vertically so as to be inserted into and retracted from a vial.

Although existing autosamplers perform well, some users prefer to check the withdrawing of the sample from the vial, to be sure that no air is drawn in and/or that the syringe contains the correct amount of liquid. This enables the user to confirm the syringe is not blocked or worn and in need of replacement or maintenance. With existing autosamplers, a simple visual inspection can be difficult. Even if the syringe is visible, it is not always possible to read its scale and thus to ascertain the correct sample withdrawal.
US 9810668 B2 discloses an autosampler and gas chromatography system. The autosampler includes a carousel tray mounted for rotation about a rotation axis and including arcuately extending first and second rows of sample reservoirs, a first sample transfer tower to extract samples from the first row, a second sample transfer tower to extract samples from the second row, and a control system operative to: selectively position the carousel tray relative to the first and second sample transfer towers to align the first and second sample transfer towers with a selected pair of the sample reservoirs of the first and second rows, respectively; draw samples from the selected pair using the first and second sample transfer towers; inject the sample drawn from the first row into the at least one injector port using the first sample transfer tower; and inject the sample drawn from the second row into the at least one injector port using the second sample transfer tower.
US 2004/057855 A1 discloses a syringe pump comprises a housing. The operating panel is situated on a swiveling lid on the front side of the housing. The lid further comprises a window with a magnifying device through which the user can view the syringe. The lid may further include a lighting means for illuminating the syringe.
US 2016/303397 A1 describes an integrated radiopharmaceutical patient treatment system including a patient support platform with an associated patient stimulus apparatus, an imager proximate the patient support platform, a radiopharmaceutical fluid delivery system for infusing a radiopharmaceutical fluid into a patient, a patient monitor to be associated with a patient, and an integrated system controller operably associated with the patient stimulus apparatus, imager, radiopharmaceutical fluid delivery system, and patient monitor to control and coordinate their operations.

### Summary

The disclosure aims to solve these problems of the prior art and to provide an autosampler which allows a simple yet effective visual inspection of the syringe, in particular but not exclusively of the scale of the syringe.

Accordingly, the present disclosure provides an autosampler for sampling liquids according to claim 1.

By providing a magnifying lens, it is possible to better visually inspect the syringe during use. That is, the lens allows any air bubbles in the liquid in the syringe to be detected easier and more quickly. As most syringes have a scale, the magnifying lens also allows the scale of the syringe to be read more easily, thus allowing the amount of sample liquid withdrawn from a vial to be checked more easily.

Accordingly, the lens may be arranged relative to the syringe so as to facilitate visual inspection of the syringe, in particular during the withdrawing of a liquid sample from the at least one vial. That is, the position of the lens relative to the syringe may be chosen such that the lens makes it easier for an operator to check the fluid in the syringe for bubbles and contaminations, and to check the quantity of fluid in the syringe.

The syringe may be provided with a scale, in which case the magnifying lens may be arranged to facilitate reading the scale during use, in particular during the withdrawing of a liquid sample from a vial. Reading the scale may assist in determining whether the correct amount of fluid is present in the syringe after withdrawing.

The autosampler housing may comprise a door for accessing the interior of the housing and thus for accessing the syringe. In some embodiments, the magnifying lens is attached to the door. That is, the magnifying lens may be mounted on the door, either directly or indirectly. The magnifying lens may be arranged in a holder, which holder may be attached to a part of the housing, such as the door. The magnifying lens may be removably arranged in the holder so as to allow the lens to be cleaned or replaced. The door may have a transparent section and the lens may be arranged behind the transparent section, that is, on the side of the door facing the interior of the housing of the autosampler. Alternatively, the lens may be arranged in front of the transparent section, that is, on the side of the door facing the exterior of the housing of the autosampler. In some embodiments, the lens may be part of such a transparent door section.

In some embodiments, the magnifying lens has a substantially round shape. However, lenses having other shapes, such as substantially elliptical or oval, or approximately square, may also be used. In some embodiments, the magnifying lens is made of plastic, while in other embodiments, the lens may be made of glass.

The autosampler may comprise a holder for holding at least one vial. Such a holder may be stationary, although some holders may rotate, for example. The syringe may be movable relative to the holder, for example in a vertical direction. In some embodiments, the syringe may be alternatively, or additionally, rotatable relative to the holder, for example about a vertical axis. Thus, the syringe may be capable of being moved in a circular movement from one position (e.g. above a vial) to another position (e.g. above an injection port or above another vial). The autosampler is not limited to rotations and may alternatively, or additionally, provide translations of the vial in a substantially vertical plane. The syringe may alternatively, or additionally, be rotatable about a non-vertical axis.

The autosampler may be arranged near one or more injection ports for injecting a liquid sample. The injection port may be connected to a gas chromatography column, for example. The (rotational and/or translational) movement of the autosampler may allow the syringe to be brought above an injection port.

Although a single magnifying lens may be sufficient for most applications, embodiments of the autosampler can be envisaged which comprise a further magnifying lens arranged relative to the syringe so as to facilitate further visual inspection of the syringe during use. Thus, the autosampler of the disclosure may comprise at least two lenses, in some embodiments even at least three lenses. The lenses may be arranged in such a way that they each allow visual inspection of different parts of the syringe, and/or of different positions of the syringe during use.

The autosampler according to the disclosure may further comprise a camera arranged relative to the magnifying lens so as to allow inspection of the syringe by using the camera. The camera may be a suitable internet camera, for example, and may allow remote inspection of the syringe. If a camera is mounted in front of a lens, at least one further lens may be provided for direct visual inspection by an operator, in addition to the indirect visual inspection using the camera.

In some embodiments of the autosampler, the lens may have a magnification of between 1x and 20x, in particular between 5x and 15x, for example 6x. Other magnifications may, however, also be used.

The disclosure also provides an apparatus for chromatography, the apparatus comprising:
- at least one gas chromatography column and at least one autosampler,

the autosampler comprising:
   - a holder configured for holding at least one vial,
   - a syringe configured for withdrawing a liquid sample from the at least one vial,
   - an actuator configured for actuating the syringe,
   - a housing configured for accommodating the syringe and the actuator, and
   - a magnifying lens attached to the housing and configured for facilitating visual inspection of the syringe during use.
The apparatus may in particular be arranged for chromatography, particularly gas chromatography, liquid chromatography, and ion chromatography.

### Brief Description of the Drawings

Figs. 1A & 1B schematically show, in perspective, an exemplary embodiment of an autosampler in which the concepts of the disclosure may be applied.
Figs. 2A, 2B & 2C schematically show, in perspective, a door panel of the autosampler of Fig. 1 in more detail.
Figs. 3A, 3B & 3C schematically show, in sideview and cross-section, the autosampler of Fig. 1 in more detail.

### Detailed Description of the Drawings

An autosampler for sampling liquids is disclosed which allows an easier inspection of its functioning. In particular, the autosampler of the disclosure allows an easier visual inspection of the syringe by providing a magnifying lens which is positioned so at to provide an enlarged view of the syringe when it is used to withdraw or deposit a liquid sample.

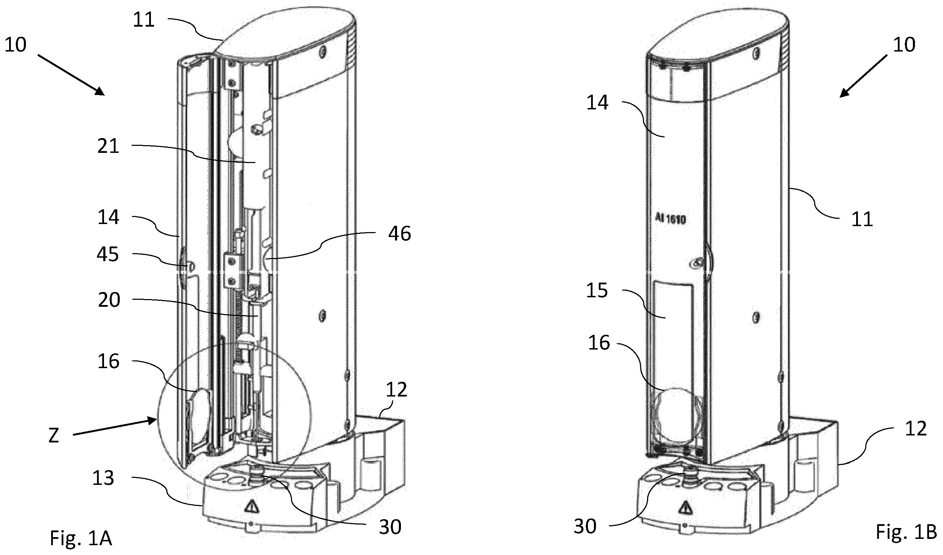

The exemplary autosampler 10 shown in perspective view in Figs. 1A & 1B comprises a housing 11, a base 12, a vial holder 13, and a housing door 14. The housing 11 accommodates a syringe 20 and an actuator 21. The vial holder 13 is mounted on the base 12 and is, in the embodiment shown, arranged for accepting five vials 30, of which only one is shown in Figs. 1A & 1B. A further vial holder (not shown) may be provided, for example at one side of the base 12. Such a further vial holder may be stationary or movable. A suitable movable further vial holder may be rotationally arranged. At least one of the vials may be used as a waste bottle for collecting waste fluid, while other vials may contain solvents for cleaning the syringe needle, for example. Still other vials may contain samples to be processed.

In the embodiment shown, the housing 11 is rotatably arranged relative to the base 12 and may be rotated by a motor (not shown). That is, the housing 11 accommodating the syringe 20 can rotate so as to move the syringe 20 from a first position above a vial to a second position above an injection port of a gas chromatograph, for example. Such an injection port (not shown) may be located to a side of the base 12, for example. In the first position, the syringe 20, actuated by the actuator 21, may withdraw a sample from a vial (e.g. 30) while in the second position, the syringe 20 may deposit the sample into an injection port, or into another vial (not shown). The sample may be a liquid sample, to be used for gas chromatography, liquid chromatography or ion chromatography, for example.

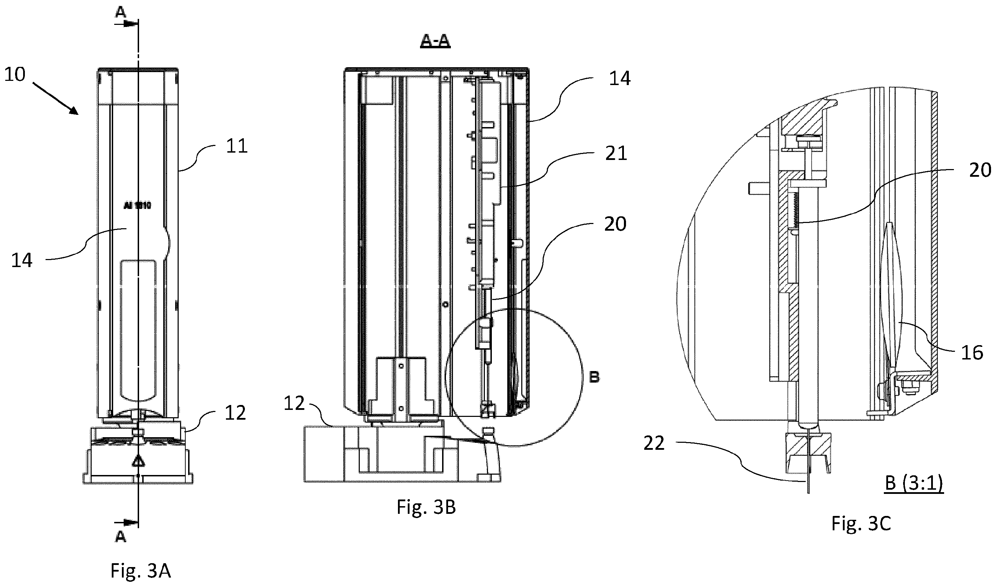

In the embodiment shown, the housing door 14 is hingedly attached to the housing 11, to allow access to the syringe 20 and, when necessary, to other parts in the interior of the housing 11. The housing door 14 is, in the embodiment shown, provided with a transparent section 15. This transparent section 15 is arranged in front of the syringe and, in particular, in front of the needle (22 in Fig. 3C) of the syringe 20. This allows a visual inspection of the syringe and its needle during use.

It has been found that most operators want to check the syringe 20 for any air bubbles and may want to read the scale of the syringe to check the quantity of the sample withdrawn from the vial. It has further been found that reading the scale of the syringe or checking for small air bubbles may be difficult.

In accordance with the present disclosure, therefore, the autosampler is provided with a lens to facilitate visually inspecting the syringe before, during and/or after use. In the embodiment shown, the door 14 is provided with a magnifying lens 16. In particular, a magnifying lens 16 is in the embodiment shown arranged behind the lower part of the transparent section 15 of the door 14, at the side of the door facing the interior of the housing 11. This lower part of the transparent section 15 typically corresponds with the part where the needle is located when the syringe is retracted (or in its "up" position in the embodiment shown) and where the body of the syringe is located when the syringe is inserted in a vial or an injection port (or its "down" position) in this embodiment), as indicated with "Z" in Fig. 1A.

It is noted that in some embodiments the lens 16 may be integrated in the transparent section 15 of the door 14, so that the lens and the transparent section constitute a single part. In certain embodiments, the lens 16 may constitute the only transparent part of the door 14. In other embodiments, the lens 16 may not be mounted in a door but in a stationary part of the housing while still allowing a view of the syringe during use.

In the embodiment shown, where the lens 16 is mounted in the door, the syringe 20 may be replaced when the door is open while leaving the lens in place. There is thus no need to handle the lens when handling the syringe.

In the embodiment shown, the door 14 is providing with a magnet 45 while a corresponding iron tab 46 is mounted on the housing to ensure that the door 14 remains closed but can be opened easily.

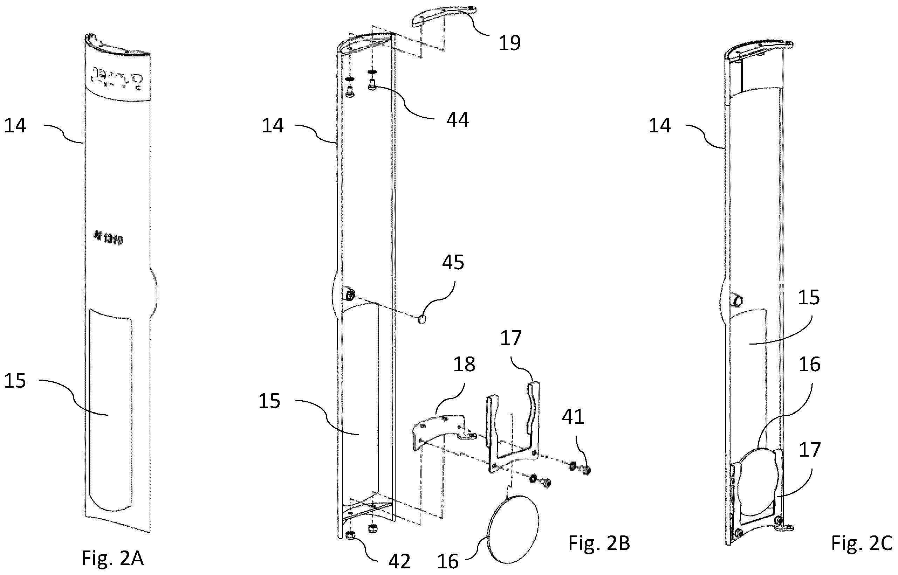

The door 14 is shown in more detail in Figs. 2A-2C. Fig. 2A shows a perspective view of the front of the door 14. The transparent section 15 is visible in Fig. 2A, the lens is however not shown. The perspective view of the back of the door 14 shown in Figs. 2B and 2C shows how the lens 16 is mounted in this embodiment. The lens 16 can be inserted into a U-shaped frame 17 which is mounted on the door 14 using a mounting bracket 18, screws 41 and nuts 42. The holder 17 may be made of metal, such as stainless steel. The mounting bracket 18 may also be made of metal, for example aluminum. Several other parts, such as walls of the housing 11 and the door 14 may be made of plastic, while other housing parts may be made of aluminum, for example. The lens 16 may be made of glass or plastic.

A reinforcing part 19, which may be made of metal, such as iron or aluminum, is mounted on an upper section of the door 14 using screws 44. A magnetic fastener 45 is also mounted on the back side of the door 14 and serves to hold the door closed. Fig. 2C shows the parts of Fig. 2B in an assembled state.

Fig. 3A shows an autosampler 10 in front view, while Fig. 3B shows the same autosampler in a cross-sectional view taken along the line A-A in Fig. 3A. the view of Fig. 3B shows the actuator 21 for actuating the syringe 20. Fig. 3C shows the section B of Fig. 3B in more detail. While in Fig. 3B the syringe 20 is in the "up" position, in Fig. 3C it is in the "down" position, so that its needle 22 can enter a vial, for example. It can be seen in Fig. 3C that the lens 16 is accommodated in the door 14 so as to be in front of the syringe body when the syringe 20 is in the "down" position. This allows the scale (not shown) of the syringe to be read, and any air bubbles in the syringe to be detected, assisted by the magnifying lens 16.

The magnifying lens 16 may have a magnification of between 1x and 20x, in particular between 5x and 15x, for example approximately 5x, 6x, 7x, 8x, 9x, 10x, 11x, 12x, 13x or 14x, although other optical magnifications may also be used, such as 2x, 3x or 4x. The lens 16 may be made of a suitable transparent plastic or of glass. In some embodiments, the lens 16 may be integrated in the transparent section 15 of the door so as to form a single part. In some embodiments, the entire door may be transparent, and the lens may be integrated in the transparent door.

The inside of the housing may be provided with at least one light source to further facilitate the visual inspection of the syringe. A light source may be constituted by an LED array mounted on the inside of the housing, for example on the inside of the door near the hinges.

The autosampler of the disclosure may comprise a controller, which may include a microprocessor with an associated memory, for controlling the actuator, the motor and the light source, if applicable.

The autosampler of the disclosure may be used in chromatography apparatus, in particular in gas chromatography apparatus. An apparatus for gas chromatography may thus comprise at least one gas chromatography column and at least one autosampler according to the disclosure. In particular, the autosampler may comprise a holder for holding at least one vial, at least one syringe for withdrawing a liquid sample from the at least one vial, an actuator for actuating the syringe, a housing for accommodating the syringe and the actuator, and at least one magnifying lens attached to the housing to facilitate visual inspection of the syringe during use.

It will be understood by those skilled in the art that the disclosed concepts are not limited to the embodiments shown and that many additions and modifications can be made without departing from the scope of the disclosure as defined in the appending claims.

## Claims

1. An autosampler (10) for sampling liquids, the autosampler (10) comprising:
- a syringe (20) configured for withdrawing a liquid sample from a vial (30), and
- an actuator (21) configured for actuating the syringe (20),
**characterized in that** the autosampler further comprises:
- a housing (11) configured for accommodating the syringe (20) and the actuator (21), wherein the housing (11) comprises a door (14) configured for accessing the syringe (20),
- a magnifying lens (16) attached to the housing (11) and configured for facilitating visual inspection of the syringe (20) during use, wherein the magnifying lens (16) is mounted on the door (14), and
- a controller for controlling the actuator (21).

2. The autosampler (10) according to claim 1, wherein the magnifying lens (16) is arranged relative to the syringe (20) so as to facilitate visual inspection of the syringe (20) during the withdrawing of a liquid sample from the vial (30).

3. The autosampler (10) according to any of the preceding claims, wherein the syringe (20) is provided with a scale, and wherein the magnifying lens (16) is arranged so as to facilitate reading the scale during the withdrawing of a liquid sample from the vial (30).

4. The autosampler (10) according to claim 1, wherein the door (14) comprises a transparent section (15), and wherein the lens (16) is arranged behind the transparent section (16).

5. The autosampler (10) according to claim 1, wherein the magnifying lens (16) is arranged in a holder (17), which holder (17) is attached to the door (14).

6. The autosampler (10) according to claim 5, wherein the magnifying lens (16) is removably arranged in the holder (17).

7. The autosampler (10) according to any of the preceding claims, wherein the magnifying lens (16) has a shape which is one of substantially round, substantially square or substantially elliptical.

8. The autosampler (10) according to any of the preceding claims, wherein the magnifying lens (16) comprises plastic.

9. The autosampler (10) according to any of the preceding claims, wherein the magnifying lens (16) comprises glass.

10. The autosampler (10) according to any of the preceding claims, further comprising:
- a holder (13) configured for holding the vial (30),
wherein the syringe (20) is movable relative to the holder (13) in at least a vertical direction.

11. The autosampler (10) according to claim 10, wherein the syringe (20) is rotatable relative to the holder (13) about at least a vertical axis.

12. The autosampler (10) according to any of the preceding claims, further comprising:
- a further magnifying lens (16) arranged relative to the syringe (20) so as to facilitate further visual inspection of the syringe (20) during use.

13. The autosampler (10) according to any of the preceding claims, further comprising:
- a camera arranged relative to the magnifying lens (16) so as to allow inspection of the syringe (20) by using the camera.

14. The autosampler (10) according to any of the preceding claims, wherein the lens (16) has a magnification of between 1x and 20x, or between 5x and 15x.

## Patentansprüche

1. Autosampler (10) zum Probenehmen von Flüssigkeiten, wobei der Autosampler (10) umfasst:
- eine Spritze (20), die zum Entnehmen einer Flüssigkeitsprobe aus einem Fläschchen (30) konfiguriert ist, und
- einen Aktor (21), der zum Betätigen der Spritze (20) konfiguriert ist,
**dadurch gekennzeichnet, dass** der Autosampler ferner umfasst:
- ein Gehäuse (11), das zum Aufnehmen der Spritze (20) und des Aktors (21) konfiguriert ist, wobei das Gehäuse (11) eine Tür (14) umfasst, die zum Zugriff auf die Spritze (20) konfiguriert ist,
- eine Vergrößerungslinse (16), die an dem Gehäuse (11) befestigt und konfiguriert ist, um die Sichtkontrolle der Spritze (20) während der Verwendung zu erleichtern, wobei die Vergrößerungslinse (16) an der Tür (14) montiert ist, und
- eine Steuerung zum Steuern des Aktors (21).

2. Autosampler (10) nach Anspruch 1, wobei die Vergrößerungslinse (16) relativ zur Spritze (20) angeordnet ist, um eine Sichtkontrolle der Spritze (20) während des Entnehmens einer Flüssigkeitsprobe aus dem Fläschchen (30) zu erleichtern.

3. Autosampler (10) nach einem der vorstehenden Ansprüche, wobei die Spritze (20) mit einer Skala bereitgestellt wird, und wobei die Vergrößerungslinse (16) angeordnet ist, um das Ablesen der Skala während des Entnehmens einer Flüssigkeitsprobe aus dem Fläschchen (30) zu erleichtern.

4. Autosampler (10) nach Anspruch 1, wobei die Tür (14) einen transparenten Abschnitt (15) umfasst, und wobei die Linse (16) hinter dem transparenten Abschnitt (16) angeordnet ist.

5. Autosampler (10) nach Anspruch 1, wobei die Vergrößerungslinse (16) in einem Halter (17) angeordnet ist, wobei der Halter (17) an der Tür (14) befestigt ist.

6. Autosampler (10) nach Anspruch 5, wobei die Vergrößerungslinse (16) entfernbar in dem Halter (17) angeordnet ist.

7. Autosampler (10) nach einem der vorstehenden Ansprüche, wobei die Vergrößerungslinse (16) eine Form aufweist, die eine von im Wesentlichen rund, im Wesentlichen quadratisch oder im Wesentlichen elliptisch ist.

8. Autosampler (10) nach einem der vorstehenden Ansprüche, wobei die Vergrößerungslinse (16) Kunststoff umfasst.

9. Autosampler (10) nach einem der vorstehenden Ansprüche, wobei die Vergrößerungslinse (16) Glas umfasst.

10. Autosampler (10) nach einem der vorstehenden Ansprüche, ferner umfassend:
- einen Halter (13), der zum Halten des Fläschchens (30) konfiguriert ist,
wobei die Spritze (20) relativ zu dem Halter (13) in mindestens einer vertikalen Richtung bewegbar ist.

11. Autosampler (10) nach Anspruch 10, wobei die Spritze (20) relativ zu dem Halter (13) um mindestens eine vertikale Achse drehbar ist.

12. Autosampler (10) nach einem der vorstehenden Ansprüche, ferner umfassend:
- eine weitere Vergrößerungslinse (16), die relativ zu der Spritze (20) angeordnet ist, um eine weitere Sichtkontrolle der Spritze (20) während der Verwendung zu erleichtern.

13. Autosampler (10) nach einem der vorstehenden Ansprüche, ferner umfassend:
- eine Kamera, die relativ zu der Vergrößerungslinse (16) angeordnet ist, um eine Inspektion der Spritze (20) unter Verwendung der Kamera zu ermöglichen.

14. Autosampler (10) nach einem der vorstehenden Ansprüche, wobei die Linse (16) eine Vergrößerung von zwischen 1-fach und 20-fach oder zwischen 5-fach und 15-fach aufweist.

## Revendications

1. Échantillonneur automatique (10) destiné à échantillonner des liquides, l'échantillonneur automatique (10) comprenant :
- une seringue (20) conçue pour prélever un échantillon liquide d'un flacon (30), et
- un actionneur (21) conçu pour actionner la seringue (20),
**caractérisé en ce que** l'échantillonneur automatique comprend en outre :
- un boîtier (11) conçu pour loger la seringue (20) et l'actionneur (21), dans lequel le boîtier (11) comprend une porte (14) conçue pour accéder à la seringue (20),
- une lentille grossissante (16) fixée au boîtier (11) et conçue pour faciliter l'inspection visuelle de la seringue (20) pendant l'utilisation, dans lequel la lentille grossissante (16) est montée sur la porte (14), et
- un dispositif de commande permettant de commander l'actionneur (21).

2. Échantillonneur automatique (10) selon la revendication 1, dans lequel la lentille grossissante (16) est agencée par rapport à la seringue (20) de manière à faciliter l'inspection visuelle de la seringue (20) pendant le prélèvement d'un échantillon liquide du flacon (30).

3. Échantillonneur automatique (10) selon l'une quelconque des revendications précédentes, dans lequel la seringue (20) est munie d'une échelle, et dans lequel la lentille grossissante (16) est agencée de manière à faciliter la lecture de l'échelle pendant le prélèvement d'un échantillon liquide du flacon (30).

4. Échantillonneur automatique (10) selon la revendication 1, dans lequel la porte (14) comprend une section transparente (15), et dans lequel la lentille (16) est agencée derrière la section transparente (16).

5. Échantillonneur automatique (10) selon la revendication 1, dans lequel la lentille grossissante (16) est agencée dans un support (17), lequel support (17) est fixé à la porte (14).

6. Échantillonneur automatique (10) selon la revendication 5, dans lequel la lentille grossissante (16) est agencée de manière amovible dans le support (17).

7. Échantillonneur automatique (10) selon l'une quelconque des revendications précédentes, dans lequel la lentille grossissante (16) a une forme qui est l'une parmi sensiblement ronde, sensiblement carrée ou sensiblement elliptique.

8. Échantillonneur automatique (10) selon l'une quelconque des revendications précédentes, dans lequel la lentille grossissante (16) comprend du plastique.

9. Échantillonneur automatique (10) selon l'une quelconque des revendications précédentes, dans lequel la lentille grossissante (16) comprend du verre.

10. Échantillonneur automatique (10) selon l'une quelconque des revendications précédentes, comprenant en outre :
- un support (13) conçu pour contenir le flacon (30),
dans lequel la seringue (20) peut être déplacée par rapport au support (13) dans au moins une direction verticale.

11. Échantillonneur automatique (10) selon la revendication 10, dans lequel la seringue (20) peut tourner par rapport au support (13) autour d'au moins un axe vertical.

12. Échantillonneur automatique (10) selon l'une quelconque des revendications précédentes, comprenant en outre :
- une lentille grossissante supplémentaire (16) agencée par rapport à la seringue (20) de manière à faciliter une inspection visuelle supplémentaire de la seringue (20) pendant l'utilisation.

13. Échantillonneur automatique (10) selon l'une quelconque des revendications précédentes, comprenant en outre :
- une caméra agencée par rapport à la lentille grossissante (16) de manière à permettre l'inspection de la seringue (20) à l'aide de la caméra.

14. Échantillonneur automatique (10) selon l'une quelconque des revendications précédentes, dans lequel la lentille (16) a un grossissement compris entre 1x et 20x, ou entre 5x et 15x.
